# EUROPÄISCHE PATENTSCHRIFT

(11) **EP 1 240 991 B1**
(45) Veröffentlichungstag und Bekanntmachung des Hinweises auf die Patenterteilung: **03.09.2003**
(21) Anmeldenummer: 02003098.7
(22) Anmeldetag: 13.02.2002
(51) Int. Cl.: B29C 45/14, B29C 45/00

(54) **Verfahren zur Herstellung von dekorbeschichteten Formteilen und diese Formteile**
Method of manufacturing parts having a decorative layer and manufactured parts
Procédé de fabrication de pièces ayant un revêtement décoratif et pièces ainsi fabriquées

(30) Priorität: 16.03.2001 DE 10113272
(43) Veröffentlichungstag der Anmeldung: 18.09.2002
(73) Patentinhaber: BASF AKTIENGESELLSCHAFT, 67056 Ludwigshafen (DE)
(72) Erfinder: Bartl, Jürgen, 67063 Ludwigshafen (DE); Guenther, Erhard, Dr., 67454 Hassloch (DE); Klenz, Rainer, 67454 Hassloch (DE); Liese, Michaela, 67061 Ludwigshafen (DE); Lüdecke Taeger, Tilman, Dr., 64342 Seeheim-Jugenheim (DE)

(56) Entgegenhaltungen:
- EP-A- 0 506 218
- DE-A- 19 851 117
- FR-A- 1 492 073

## Beschreibung

Die vorliegende Erfindung betrifft ein Verfahren zur Herstellung von mit Dekormaterialien beschichteten Kunststoffformteilen.

Verfahren zur Herstellung von mit Textil oder Leder beschichteten Kunststoffformteilen sind dem Fachmann bekannt. Beispielsweise werden derartige Dekormaterialien häufig auf Kunststoffbauteile aufgeklebt oder aufkaschiert (s.a. DE 296 22 843). Insbesondere im Automobilbau ist dieses die bevorzugte Variante, wenn großflächige Innenausstattungsbauteile und/oder solche mit einer komplexen Geometrie zu fertigen sind. Dieses Verfahren erfordert allerdings eine Vielzahl separater Arbeitsschritte. Darüber hinaus müssen Klebstoffe eingesetzt werden. Es ist daher kosten- und zeitintensiv und kommt im allgemeinen nur für Modelle der Luxusklasse in Frage (s.a. G. Franke, "Leder - ein klassischer Interieurwerkstoff" in "Kunststoffe im Automobilbau: Zukunft durch neue Anwendungen", VDI-Verlag, Düsseldorf, 1998, Seiten 337 bis 350; Bangert et al., "Kreative Materialkombinationen - Beispiele innovativer Anwendungen" in "Kunststoffe im Automobilbau: Kostenreduktion durch innovatives Spritzgießen", VDI-Verlag, Düsseldorf, 1997).

Um zu einem effizienteren serientauglichen Verfahren zu gelangen, hat man versucht, Dekormaterialien mit einem Kunststoffmaterial direkt in einem Arbeitsgang bei der Herstellung des Bauteils, z.B. mittels der Hinterspritz- oder Hinterpresstechnologie, zu verbinden (s.a. Kunststoffe, 1990, 80, Seiten 997 bis 1002).

In der DE-A 199 03 338 wird eine Spritzgussvorrichtung beschrieben, mit der Dekormaterialien hinterspritzt werden können. Um empfindliche Obermaterialien wie Leder hierbei nicht zu beschädigen, wird das Werkzeug zur Vermeidung hoher Drücke beim Einführen des schmelzeförmigen Kunststoffes nicht vollständig geschlossen. Damit kein Kunststoffmaterial aus dem Werkzeug austritt, ist eine spezielle Tauchkante vorgesehen, die allerdings einer hohen Belastung beim Spritzgießvorgang ausgesetzt ist und, um Verschleiß vorzubeugen, in besonderer Weise ausgestaltet zu sein hat. Dieses Verfahren erfordert für jedes neue Bauteil ein besonders konzipiertes, aufwendiges neues Werkzeug und ist daher mit erheblichen zusätzlichen Kosten verbunden.

In der EP-A 0 506 218 wird ein verbessertes Verfahren zur Herstellung von textil-, leder- und folienbeschichteten Kunststoffformteilen beschrieben, mit dem sich ein gleichmäßiger Druckaufbau beim Hinterspritzen und Hinterpressen erzielen lässt. Allerdings wird auch bei diesem Verfahren, insbesondere bei Folien mit ausgeprägter Oberflächenstruktur, häufig ein so genannter Bügeleffekt beobachtet. Bei einfarbiger Textiloberware tritt dieses Phänomen in Form matter oder glänzender Oberflächen in Erscheinung. Bei velourartiger Oberware ist häufig die Fließrichtung der Schmelze erkennbar und bei genarbten Folien, z.B. Leder, ist eine Verflachung der Narbung feststellbar (s.a. Bürkle et al., Kunststoffe, 1996, 86, Seiten 298 bis 307).

Um den genannten Beeinträchtigungen hinsichtlich Optik und Haptik entgegenzuwirken und Formteile zu erhalten, die z.B. als hochwertige Innenbauteile im Automobilbau in Frage kommen, wird in der DE-A 198 51 117 ein spezielles Werkzeug eingesetzt, das eine Oberflächenstruktur aufweist, die dem Negativ der gewünschten Oberflächenstruktur des Dekormaterials entspricht. Dieses Verfahren erfordert aber zwangsläufig für jedes Bauteil ein entsprechend konzipiertes Werkzeug. Zudem liefert jedes Werkzeug stets nur ein definiertes Prägemuster, so dass der natürliche Eindruck, der gerade durch die Verwendung von Dekormaterialien erzeugt werden soll, nicht oder nur eingeschränkt zustande kommt. Das Prägemuster des Werkzeugs überprägt in jedem Fall die ursprüngliche Oberflächenstruktur des Dekormaterials, also z.B. die natürliche Narbung eines Leders. In die gleiche Richtung zielt die von Anders et al., Kunststoffe, 1990, 80, Seiten 997 bis 1002, vorgeschlagene Lösung.

Der vorliegenden Erfindung lag somit die Aufgabe zugrunde, ein Verfahren zur Herstellung hinterspritzter oder hinterpresster Formteile zur Verfügung zu stellen, das Formteile mit Dekoroberflächen liefert, welche ihr natürliches Erscheinungsbild beibehalten, ohne dass es dazu zusätzlicher strukturgebender Maßnahmen bedarf.

Demgemäß wurde ein Verfahren zur Herstellung von Formteilen durch Hinterspritzen oder Hinterpressen von Dekormaterialien mit Kunststoffen gefunden, wobei das Dekormaterial in ein Werkzeug eingelegt und mit einem thermoplastischen Kunststoff hinterspritzt oder hinterpresst wird, das aus dem Werkzeug entnommene Formteil in Wasser gelagert oder von der Dekormaterialseite mit Wasser besprüht oder mit Luft mit einer Luftfeuchtigkeit von wenigstens 50% behandelt und anschließend einem Trocknungsvorgang unterzogen wird.

Der Verfahrensablauf für die Herstellung erfindungsgemäßer Formi teile kann grundsätzlich in mehrere separate Arbeitsschritte unterteilt werden. Zunächst wird das Dekormaterial in das Hinterspritz- oder Hinterpresswerkzeug eingelegt, z.B. mit Hilfe eines Nadelgreifers, und anschließend fixiert. Die Fixierung erfolgt üblicherweise durch Nadeln, Spannhaken oder Spannrahmen. Einlegen und Fixieren können Prozessschritte eines teil- oder vollautomatisierten Verfahrens sein.

Für das erfindungsgemäße Verfahren zur Herstellung von beschichteten Formteilen kann auf alle bekannten Ausführungsformen des Hinterspritzens oder Hinterpressens von Dekormaterialien mit Kunststoffen zurückgegriffen werden (s.a. Jaeger und Fischbach, Kunststoffe 1991, 81, Seiten 869 bis 875; Anders et al., ibid.). Geeignet sind z.B. das Niederdruckspritzgießen oder das Gasinnendruck-Verfahren (GID-Verfahren). Bevorzugt sind die Spritzgießverfahren der Niederdrucktechnik, wie z.B. bei Bürkle et al., ibid., oder bei Woite und Straßer in "Kunststoffe im Automobilbau", VDI-Verlag, Düsseldorf, 1994, Seiten 280 bis 312, beschrieben.

Um das Dekormaterial beim Hinterspritzen oder Hinterpressen nicht zu schädigen, wird der Schmelzdruck beim Einlassen in das Werkzeug bevorzugt so eingestellt, dass er 100 bar sowie insbesondere 80 bar nicht überschreitet. Bevorzugt wird nach erfolgter Fülldruckoptimierung auf Kompression und Nachdruck, d.h. auf Prozessschritte, die üblicherweise beim Spritzgießen zur Anwendung kommen, verzichtet.

Bei der Gasinnendruck-Technologie wird in der Regel gegen Ende des Einspritzvorgangs die plastische Seele durch ein inertes Gas, zumeist Stickstoff, verdrängt. Details zum GID-Verfahren sind dem Fachmann bekannt und z.B. in Eyerer et al., Kunststoffe, 1991, 81, Seiten 851 bis 862, festgehalten.

Für das Hinterpressen von Dekormaterialien mit Kunststoffen wird bevorzugt auf das Spritzprägeverfahren zurückgegriffen. Hierbei wird die Kavität des Werkzeugs zunächst teilgefüllt, d.h. die Kunststoffschmelze wird in das geöffnete Werkzeug eingespritzt.

Die Ausformung des Formteils erfolgt über eine Schließbewegung des Werkzeugs. Der Masseeintrag in das Werkzeug kann als Strang oder als Breitband über eine Breitschlitzdüse oder einen Heißkanal in das Werkzeug eingeführt werden.

Dem Fachmann bekannt ist z.B. die Ausführungsform des Hinterprägens nach dem Quellflussverfahren, auch SP-MOLD- oder Sumitomo-Verfahren genannt. Bei diesem Verfahren wird die Schmelze bei geöffnetem Werkzeug durch ein Heißkanalsystem in die horizontale Trennebene der unteren festen Werkzeughälfte eingebracht. Dabei berührt die eingebrachte Formmasse das Dekor vor dem Prägen in der Regel nicht. Beim eigentlichen Prägevorgang übt dann die fließende Schmelze eine Scherwirkung auf die Dekorschicht aus. Eine weitere bekannte Ausführungsform des Hinterprägens stellt das Strangablageverfahren dar. Die Plastifizierung erfolgt bei diesem Verfahren in einem Extruder oder einem Spritzaggregat, was die Heißkanaltechnik nach dem Quellflussverfahren überflüssig macht. Der Schmelzeauftrag auf das Unterwerkzeug geschieht durch die Rückzugbewegung der Plastifiziereinheit in der Schneckenachse. Nach dem Ablegen der Schmelze in Form eines Strangs oder als Breitband, wird das Werkzeug geschlossen und die Prägekraft aufgebracht. Geeignete Hinterprägeverfahren finden sich u.a. auch bei Woite und Straßer, ibid., Seiten 291 bis 297, beschrieben.

Als Dekormaterialen kommen ein- oder mehrschichtige Strukturen in Frage. Geeignet sind z.B. Polyester-, Polyamid-, Polypropylenoder Baumwolltextilien als Gewebe, des weiteren Gewirke, Gestricke und Nadel- oder Polfliese (s.a. Woite und Straßer, ibid., Seiten 301 und 302, sowie G. Jägerhuber, "VLIESE - verschiedene Technologien im Vergleich" in "Kunststoffe im Automobilbau: Zukunft durch neue Anwendungen", VDI-Verlag, Düsseldorf, 1998, Seiten 351 bis 354).

Bevorzugt wird auf Leder als Dekormaterial zurückgegriffen, wobei alle gebräuchlichen Ledersorten in Frage kommen, also z.B. metallsalzgegerbte (z.B. Chrom, Aluminium) wie auch metallsalzfreie Leder. Die Herstellung solcher Leder wird z.B. in "Das Leder", 1992 (43), Seite 283 ff. ausführlich beschrieben. Bevorzugt sind Ledersorten, die man mittels metallsalzfreier Gerbung erhält, da sie regelmäßig über einen geringeren Hitzeschrumpf verfügen. Derartige Leder sind auch unter der Bezeichnung FOC-Leder (free of chrome) bekannt.

Selbstverständlich können auch Chromleder verarbeitet werden. Diese weisen im allgemeinen eine hydrothermale Stabilität von etwa 100°C auf.

Bei der Lederherstellung nach dem Wet-end- wie auch nach dem Finish-Prozess sind die Prozesschemikalien und Farbstoffe bevorzugt derart auszuwählen, dass sie sowohl dem Druck als auch den thermischen Bedingungen des Hinterspritz- bzw. Hinterpressvor-5 gangs standhalten. Vor allem die im Wet-end-Prozess zum Einsatz kommenden Fettungsmittel sind vorzugsweise im Kollagengeflecht gut fixiert, so dass beim Hinterspritz-/Hinterpressvorgang keine Fettmigration an die Oberfläche oder in den Kunststoff eintritt, wodurch gegebenenfalls Glanzstellen oder Fettverunreinigungen an der Oberfläche oder eine Beeinträchtigung der Haftung zwischen Leder und Kunststoff auftreten können. Des weiteren sind die in der Vor- und Nachgerbung zum Einsatz kommenden Gerbstoffe bevorzugt derart zu wählen, dass eine gute Faserseparierung erfolgt und die Leder eine gute Licht-, wärme- und Hitzebeständigkeit aufweisen. Dies ist vor allem mit Glutardialdehyd in Kombination mit synthetischen Gerbstoffen auf Basis Dihydroxidiphenylsulfon zu erreichen. Unabhängig vom gewählten Gerbstoff ist beim Wet-end-Prozess eine Schrumpfungstemperatur von mindestens 70°C im nassen Zustand vorteilhaft.

Die Dicke des verwendeten Leders ist im allgemeinen abhängig von der Form und Anwendung des Lederbauteils und kann zwischen 0,4 und 3,0 mm variieren, wobei in der Regel eine Dicke von 0,8 bis 3,0, vorzugsweise 1,0 bis 2,0 und insbesondere von 1,2 bis 1,8 mm bevorzugt ist.

Vorteilhafterweise hinterspritzt oder hinterpresst man Leder in einem möglichst trockenen Zustand. Als günstig haben sich Feuchtigkeitsgehalte kleiner 20 Gew.-% erwiesen.

Die Sichtseite des Leders, die an der Formfläche des Formwerkzeugs zur Anlage gelangt, kann sowohl bereits gebrauchsfertig mit einer handelsüblichen Lackierung (Zurichtung) versehen sein, als auch ohne Vorbehandlung bzw. Lackierung, d.h. als so genannte Crust eingesetzt werden. Im letzteren Fall kann die Lackierung am fertigen, mit Kunststoff hinterspritzten/hinterpressten Lederteil aufgebracht werden. Zwecks Lackierung können alle in der Lederherstellung bekannten Lackierprodukte und -verfahren eingesetzt werden.

An die Qualität des Leders werden in der Regel geringere Anforderungen gestellt als bei den Verfahren, in denen die Verbindung mittels Klebens erfolgt, ohne jedoch Einbußen hinsichtlich Optik oder Haptik in Kauf nehmen zu müssen.

Da Leder als Naturstoff nicht mit beliebig hohen Temperaturen belastet werden kann, kühlt man vorteilhafterweise die am Leder anliegende Formfläche des Werkzeugs auf Temperaturen im Bereich von 10 bis 80°C, bevorzugt 20 bis 75°C und insbesondere von 40 bis 65 °C.

Das Dekormaterial kann sowohl durch die einströmende Polymerschmelze in die Form gepresst werden, als auch zuvor in einem separaten Schritt tiefgezogen werden. Auf diese Weise kann häufig das Dekormaterial exakter positioniert werden, was auch eine präzisere Formgebung zulässt.

Als geeignete Werkzeuge können die in der Kunststofftechnik beim Hinterspritzen und Hinterpressen üblichen Apparaturen verwendet werden. Das Werkzeug, an dem das Dekormaterial anliegt, verfügt geeigneterweise über Mittel für eine ausreichende Wärmeabfuhr.

Als Hinterspritz- oder Hinterpresskunststoffe kommen alle bekannten polymeren Trägermaterialien in Frage. Geeignet sind z.B. thermoplastische Polymere wie Polyolefine, z.B. Polyethylen oder Polypropylen, Polyester, z.B. Polybutylenterephthalat (PBT) und Polyethylenterephthalat (PET), Polycycloolefine, Poly(meth)acrylate, z.B. Polymethylmethacrylat, Polyamide, Polycarbonate, Polyurethane, Polyacetale, z.B. Polyoxymethylen (POM), Polystyrole, Polyphenylenether, Polysulfone, Polyethersulfonen, Polyetherketone, Styrol(co)polymere oder Mischungen der vorgenannten Polymere.

Geeignete Styrol(co)polymere stellen ABS-, ASA- und AES-Polymerisate dar. Bei ABS-Polymerisaten handelt es sich u.a. um schlagzähmodifizierte Styrol/Acrylnitril-Polymerisate, bei denen Pfropfcopolymerisate von Styrol und Acrylnitril auf Polybutadienkautschuken in einer Copolymermatrix aus Styrol und Acrylnitril vorliegen. Unter ASA-Polymerisate werden im allgemeinen schlagzähmodifizierte Styrol/Acrylnitril-Polymerisate verstanden, bei denen Pfropfcopolymerisate von vinylaromatischen Verbindungen, insbesondere Styrol, und Vinylcyaniden, insbesondere Acrylnitril, auf Polyalkylacrylatkautschuken in einer Copolymermatrix aus insbesondere Styrol und Acrylnitril vorliegen. In Frage kommt hier beispielsweise das Handelsprodukt Luran® S (BASF AG).

Weiterhin geeignet als Styrol(co)polymere sind Styrol/Acrylnitril-Copolymerisate (SAN), Methylmethacrylat/Acrylnitril/Butadien/Styrol-Polymerisate, z.B. das Handelsprodukt Terlux® (BASF AG), Mischungen unterschiedlicher Styrol/Butadien-Polymerisate, Styrol/Butadien-Blockcopolymerisate und Vinylchlorid/Acrylat-Pfropfcopolymerisate. Bevorzugt setzt sich das Hinterspritzoder Hinterpressmaterial aus Polypropylen, Polyamiden, Polybutylenterephthalat, thermoplastischen Polyurethanen, Polyethylen, Polycarbonaten oder ABS-Polymerisaten sowie deren Mischungen zusammen.

Bevorzugte Polymermischungen enthalten Polycarbonat und Polybutylentherephthalat oder Polycarbonat und ABS-Polymerisat. Für die Herstellung der Polymerschmelze können selbstverständlich auch Recyclate aus den genannten thermoplastischen Polymeren eingesetzt werden.

Bevorzugtes Polybutylenterephthalat verfügt über eine Schmelzflussrate (MFR) nach ISO 1133 von 5 bis 50, insbesondere von 5 bis 30 g/10 min (bestimmt bei 230°C unter einer Last von 2,16 kg). Solche Produkte sind zum Beispiel unter der Bezeichnung Ultradur® (BASF AG) im Handel erhältlich.

In bevorzugte SAN-Polymerisate ist bis zu 45 Gew.-%, vorzugsweise bis zu 20 Gew.-% Acrylnitril einpolymerisiert. Derartige SAN-Polymerisate weisen eine Schmelzflussrate von 1 bis 25, insbesondere von 4 bis 20 g/10 min auf. Solche Produkte sind z.B. unter der Bezeichnung Luran® (BASF AG) im Handel erhältlich.

Bevorzugte ABS-Polymerisate setzen sich zu max. 35 Gew.-%, insbesondere zu max. 20 Gew.-% aus Acrylnitril und zu max. 35 Gew.-%, insbesondere zu max. 30 Gew.-% aus Butadien zusammen. Deren Schmelzflussrate liegt im Bereich von 1 bis 40, insbesondere im Bereich von 2 bis 30 g/10 min. Solche Produkte sind z.B. unter der Bezeichnung Terluran® (BASF AG) im Handel erhältlich.

Unter der verwendeten Bezeichnung Polypropylen sollen sowohl Homo- als auch Copolymere des Propylens verstanden werden, Copolymere des Propylens enthalten in untergeordneten Mengen mit Propylen copolymerisierbare Monomere, beispielsweise C₂- bis C₈-Alk-1-ene wie Ethen, 1-Buten, 1-Penten oder 1-Hexen. Selbstverständlich können auch zwei oder mehrere verschiedene Comonomere verwendet werden.

Die vorgenannten Polymerwerkstoffe sind im allgemeinen bekannt, beispielsweise aus H. Domininghaus, Die Kunststoffe und ihre Eigenschaften, VDI-Verlag, Düsseldorf (1992).

Das polymere Trägermaterial kann 1 bis 60, vorzugsweise 5 bis 50, besonders bevorzugt 10 bis 40 Gew.-%, bezogen auf das Gesamtgewicht des Trägermaterials, an üblichen Hilfs-/Füll- und/oder Faserstoffen enthalten.

Derartige Hilfsstoffe sind beispielsweise Gleit- oder Entformungsmittel, Wachse, Effektfarbmittel, z.B. Pigmente wie Titandioxid oder Farbstoffe, Flammschutzmittel, Antioxidantien, Stabilisatoren, z.B. gegen Lichteinwirkung, oder Antistatika.

Als teilchenförmige Füllstoffe können zudem Ruß, Holzmehl, amorphe Kieselsäure, Magnesiumcarbonat, Magnesiumhydroxid, Bariumsulfat, gepulvertes Quarz, Glimmer, Mica, Bentonite, Talkum, insbesondere mit einer mittleren Korngröße im Bereich von 0,1 bis 10 µm (gemessen nach DIN 6615), Calciumcarbonat, Kreide, Glaskugeln, Feldspat oder insbesondere Calciumsilikate wie Wollastonit und Kaolin verwendet werden.

Des weiteren können zur Verstärkung auch Fasermaterialien, worunter vorliegend auch plättchenförmige Produkte zu verstehen sind, wie Flachs, Hanf, Jute, Sisal, Ramie oder Carnaf, Aluminium-Flakes oder Aramid-, Stahl-, Kohle- oder Glasfasern, letztere auch mit geeigneten Schlichten beschichtet, verwendet werden. Die Fasern liegen in dem Kunststoffmaterial im allgemeinen in einer Menge von 3 bis 40, bevorzugt von 5 bis 40 und besonders bevorzugt von 10 bis 35 Gew.-%, bezogen auf das Gesamtgewicht des Trägermaterials , vor. Als Glasfasern kommen Langund Kurzglasfasern sowie Mischungen dieser Fasertypen in Betracht.

Selbstverständlich kann man zu dem polymeren Trägermaterial auch übliche Zusatzstoffe wie Licht-, UV- und Wärmestabilisatoren, Ruße, Verarbeitungshilfsmittel sowie Flammschutzmittel in den üblichen Mengen hinzufügen.

Das hinterspritzte oder hinterpresste Formteil kann manuell oder automatisch aus dem Werkzeug genommen werden.

Die erfindungsgemäße Wasserbehandlung dieses Formteils kann entweder unmittelbar nach der Entnahme aus dem Werkzeug oder auch zu einem späteren Zeitpunkt vorgenommen werden.

In einer Ausführungsform des erfindungsgemäßen Verfahrens wird das Formteil in Wasser gelagert. Das Formteil kann hierbei auch derart gelagert werden, dass sich nur die Lederoberfläche im direkten Kontakt mit Wasser befindet. Die Wassertemperatur liegt im allgemeinen im Bereich von 10 bis 90°C, bevorzugt im Bereich von 15 bis 70°C und besonders bevorzugt im Bereich von 20 bis 40°C. Üblicherweise wird die gewünschte nachhaltige Wirkung des sich Wiederherstellens der Lederstruktur bereits nach einer Lagerungsdauer von etwa 2 Stunden erzielt. Gängige Lagerungszeiträume liegen im Bereich von 4 Stunden bis 4 Tagen, bevorzugt im Bereich von 8 Stunden bis 2 Tagen.

In einer weiteren Ausführungsform wird die hinterspritzte oder hinterpresste Lederoberfläche über Zuhilfenahme geeigneter Werkzeuge oder Vorrichtungen mit Wasser besprüht. Hierfür kann auf gängige manuelle oder automatische Sprühverfahren, wie sie u.a. in der Automobil- oder Möbelindustrie beim Lackieren zur Anwendung kommen, z.B. mittels Sprühpistolen oder Sprühroboter, zurückgegriffen werden.

Der Sprühwinkel der Wasserstrahlen kann beliebig gewählt werden, ebenso die Position des Formteils, d.h. dieses kann in vertikaler oder horizontaler Lage, in letzterer ober- oder unterseitig besprüht werden. Wassertemperatur und Behandlungsdauer können wie vorhergehend für die Wasserlagerung beschrieben gewählt werden.

In einer weiteren Ausführungsform wird das hinterspritzte oder hinterpresste Formteil mit Luft, die über eine relative Luftfeuchtigkeit von wenigstens 50 % verfügt, behandelt. Besonders vorteilhaft ist eine relative Luftfeuchtigkeit von mind. 60 % und insbesondere von mind. 80 %. Die Temperaturen liegen bei dieser Ausführungsform der Wasserbehandlung im allgemeinen im Bereich von 20 bis 60°C, bevorzugt im Bereich von 30 bis 50 und besonders bevorzugt von 35 bis 45°C. Eine Behandlungsdauer von 2 Stunden ist in der Regel bereits ausreichend, wobei Zeiträume im Bereich von 4 bis 12 Stunden, insbesondere von 6 bis 8 Stunden bevorzugt sind. Zur Erzeugung von Luft mit einer Feuchtigkeit von wenigstens 50 % kann man sich gängiger Vorrichtungen und Verfahren bedienen.

Bevorzugt enthält das für die Dekor- bzw. Lederbehandlung verwendete Wasser Zugaben an oberflächenaktiven Substanzen. Geeignete oberflächenaktive Substanzen weisen im allgemeinen einen lipophilen Kohlenwasserstoffrest und eine oder mehrere hydrophile funktionale Gruppen auf. Solche Verbindungen werden auch als Tenside bezeichnet. Nach der Art und Ladung des hydrophilen Restes lassen sich geeignete Tenside unterscheiden in anionische, kationische, nichtionische und Amphotenside. Anionische Tenside weisen im allgemeinen als funktionale Gruppe einen Carboxylat-, Sulfat- oder Sulfonatrest auf. Kationische Tenside verfügen z.B. über eine quartäre Ammoniumgruppe. Als nichtionische Tenside kommen z.B. Polyetherverbindungen in Betracht. Die ampholytischen Tenside verfügen sowohl über anionische wie auch kationische funktionelle Gruppen und verhalten sich je nach pH-Wert wie anionische oder kationische Tenside.

Geeignete anionische Tenside stellen z.B. die Alkylbenzolsulfonate, die Alkansulfonate, die Fettalkoholsulfate, die Fettalkoholethersulfate oder die α-Olefinsulfonate dar. Unter kationische Tenside fallen z.B. die Alkylammonium- sowie die Imidazoliniumverbindungen.

Unter den nichtionischen Tensiden seien die Fettalkoholpolyglykolether, insbesondere die Fettalkoholethoxylate hervorgehoben. Daneben sind auch die Fettsäureethoxylate, die Fettaminethoxylate und die Alkanolamide als nichtionische Tenside besonders geeignet. Geeignete Fettalkohole als ein wesentlicher Baustein von Fettalkoholpolyglykolethern verfügen in der Regel über 6 bis 22 Kohlenstoffatome und leiten sich durch Reduktion von den entsprechenden Triglyceriden, Fettsäuren oder Fettsäuremethylestern ab. Exemplarisch seien Capronal-, Önanthal-, Capryl-, Pelargonal-, Caprinal-, Isodekan-, Lauryl-, 1-Tridekan-, Isotridekan-, Myristyl-, 1-Pentadekan-, Cetyl-, 1-Heptadekan-, Stearyl-, Oleyl-, Erucyl-, Ricinol-, Linoleyl-, Linolenyl-, Arachidyl-, Gadoleyl- Behenyl-, Erucyl- und Brassidylalkohol sowie deren Mischungen genannt. Mittels Alkoxylierung, insbesondere Ethoxylierung erhält man aus den Fettalkoholen sowie aus den korrespondierenden Fettaminen die gewünschten bevorzugten nichtionischen Tenside. Alkoxylierungs- bzw. Ethoxylierungsverfahren sind dem Fachmann hinlänglich bekannt (s.a. Römpp Chemie Lexikon, J. Falbe, M. Regitz, Hrsg., 9. Aufl., Georg Thieme Verlag, 1990, Seite 1338, sowie darin zitierte Literatur). Der Ethoxylierungsgrad, d.h. die Anzahl an miteinander verknüpften Ethoxyeinheiten, die über eine Etherbindung mit dem Fettalkohol verknüpft sind, kann in weiten Bereichen variieren. In Abhängigkeit von den Reaktionsbedingungen lassen sich ohne weiteres Fettalkohole mit 3 bis beispielsweise 100 verknüpften Ethoxyeinheiten erhalten. In den Reaktionsgemischen liegen üblicherweise Fettalkoholpolyglykolether mit nicht völlig identischem Alkoxylierungs- bzw. Ethoxylierungsgrad nebeneinander vor, d.h. es können auch diese Mischungen in dem erfindungsgemäßen Verfahren eingesetzt werden. Auch kann den Fettalkoholpolyglykolethern eine Mischung aus unterschiedlichen Fettalkohlen zugrunde liegen.

Bevorzugt sind z.B. Mischungen enthaltend 1-Tri-, 1-Tetra- und 1-Pentadekanol mit Ethoxylierungsgraden im Bereich von 3 bis 50, insbesondere 3 bis 35, beispielsweise das Handelsprodukt Lutensol® AO, und Mischungen enthaltend 1-Hexa-, 1-Octa- und gegebenenfalls 1-Heptadecanol mit Ethoxylierungsgraden im Bereich von 5 bis 80, insbesondere 10 bis 55, beispielsweise das Handelsprodukt Lutensol® AT, sowie Tridekanol und Dekanol mit Ethoxylierungsgraden im Bereich von 3 bis 80, insbesondere 3 bis 60, beispielsweise die Handelsprodukte Lutensol® TO und Lutensol® ON (alle Handelsprodukte BASF AG)

Besonders bevorzugt wird auf nichtionische Tenside zurückgegriffen.

Die Konzentration an oberflächenaktiven Substanzen in den wässrigen Systemen liegt im allgemeinen im Bereich von 0,01 bis 10 g/l, bevorzugt im Bereich von 0,1 bis 1,0 und besonders bevorzugt von 0,2 bis 0,5 g/l.

Die nach den vorbeschriebenen Ausführungsformen wasserbehandelten Formteile können auf für den Fachmann bekannte Art und Weise getrocknet werden. Hierfür bietet sich beispielsweise ein Trockenraum an, in dem die Temperatur konstant gehalten und die entstehende feuchte Luft fortwährend abgeführt wird. Geeignete Trocknungstemperaturen hängen vom Hinterpress- oder Hinterspritzmaterial wie auch vom verwendeten Dekor- bzw. Ledertyp ab. Im allgemeinen haben sich Temperaturen im Bereich von 40 bis 60°C als vorteilhaft erwiesen. Je nach Größe des Formteils ist die Trocknung in der Regel nach 2 bis 4 Stunden abgeschlossen. Restgehalte an wasser im Dekor- oder Ledermaterial im Bereich bis 30 Gew.-% wirken sich insbesondere dann, wenn dem Wasser oberflächenaktive Substanzen beigegeben worden sind, auf das Erscheinungsbild des fertigen Bauteils nicht negativ aus.

Die nach dem erfindungsgemäßen Verfahren erhaltenen Formteile verfügen über eine Beschichtungsoberfläche, die in ihrer Oberflächenstruktur dem natürlichen Erscheinungsbild der Beschichtungsware vor dem Hinterpress- oder Hinterspritzvorgang entspricht. Die Oberflächenstruktur zeigt weder flachgedrückte Stellen noch treten Glanzphänomene, die auf eine Wechselwirkung mit der Werkzeugoberfläche zurückzuführen sind. Beispielsweise werden hinterpresste oder hinterspritzte Lederoberflächen erhalten, deren Narbung sich nicht von derjenigen der noch nicht hinterspritzten bzw. hinterpressten Lederware unterscheidet, selbst wenn nicht nach dem Niederdruckverfahren gearbeitet wird. Auch wird ein für Leder typischer Soft-Touch mit den hinterspritzten oder hinterpressten Verbundformteilen, insbesondere mit solchen, die mit Wasser, dem oberflächenaktive Substanzen beigemengt waren, erhalten. Mit dem erfindungsgemäßen Verfahren können demnach hochwertige hinterspritzte oder hinterpresste Formteile auf einfache und kostengünstige Art und Weise hergestellt werden. Diese Formteile eignen sich aufgrund ihres qualitativ hochwertigen Erscheinungsbildes auch für insbesondere großflächige Innenanwendungen im Automobil-, Flugzeug-, Schiff- oder Möbelbau, also z.B. als Türinnenverkleidung, Sitzseitenverkleidung, Lenksäulenverkleidung, Dachhimmel, Mittelkonsole, Stuhllehnenbezug, Hutablage oder Armaturentafel.

## Patentansprüche

1. Verfahren zur Herstellung von dekorbeschichteten Formteilen durch Hinterspritzen oder Hinterpressen von Dekormaterialien mit Kunststoffen, wobei das Dekormaterial in ein Werkzeug eingelegt und mit einem schmelzeförmigen Kunststoff hinterspritzt oder hinterpresst wird, **dadurch gekennzeichnet, dass** man das hinterspritzte oder hinterpresste dekorbeschichtete Formteil in Wasser lagert oder von der Dekormaterialseite mit Wasser besprüht oder mit Luft mit einer Luftfeuchtigkeit von wenigstens 50 % behandelt und anschließend einem Trocknungsvorgang unterzieht.

2. Verfahren nach Anspruch 1, **dadurch gekennzeichnet, dass** das Dekormaterial Leder ist.

3. Verfahren nach Anspruch 2, **dadurch gekennzeichnet, dass** das Leder ein FOC-Leder ist.

4. Verfahren nach den Ansprüchen 1 bis 3, **dadurch gekennzeichnet, dass** das Wasser eine Temperatur im Bereich von 10 bis 90°C aufweist.

5. Verfahren nach den Ansprüchen 1 bis 4, **dadurch gekennzeichnet, dass** das dekorbeschichtete Formteil für eine Dauer von 2 h bis 4 Tagen in Wasser gelagert oder besprüht oder für eine Dauer von 2 bis 12 Stunden Luft mit einer relativen Feuchtigkeit von mindestens 50 % ausgesetzt wird.

6. Verfahren nach den Ansprüchen 1 bis 5, **dadurch gekennzeichnet, dass** das Wasser eine oberflächenaktive Substanz enthält.

7. Verfahren nach Anspruch 6, **dadurch gekennzeichnet, dass** die oberflächenaktive Substanz ein nichtionisches Tensid darstellt.

## Claims

1. A process for producing decoratively coated moldings by using plastics for the in-mold coating of decorative materials, the decorative material being placed in a mold with a molten plastic for in-mold coating, which comprises storing the in-mold coated, decoratively coated molding in water, or spraying the same with water from the decorative material side, or treating the same with air with humidity of at least 50%, and then subjecting the same to a drying procedure.

2. A process as claimed in claim 1, wherein the decorative material is leather.

3. A process as claimed in claim 2, wherein the leather is an FOC leather.

4. A process as claimed in any of claims 1 to 3, wherein the temperature of the water is in the range from 10 to 90°C.

5. A process as claimed in any of claims 1 to 4, wherein the decoratively coated molding is stored in, or sprayed with, water for a period of from 2 h to 4 days, or is exposed to air with relative humidity of at least 50% for a period of from 2 to 12 hours.

6. A process as claimed in any of claims 1 to 5, wherein the water comprises a surface-active substance.

7. A process as claimed in claim 6, wherein the surface-active substance is a nonionic surfactant.

## Revendications

1. Procédé pour la préparation de pièces moulées présentant un revêtement décoratif, dans lequel on a revêtu par injection sur le côté arrière ou par compression sur le côté arrière des matières décoratives, avec des matières plastiques, la matière décorative étant posée dans un moule et revêtue par injection sur le côté arrière ou par compression sur le côté arrière, avec une matière plastique à l'état fondu, **caractérisé en ce que** l'on entrepose la pièce moulée présentant un revêtement décoratif que l'on a revêtu par injection sur le côté arrière ou par compression sur le côté arrière dans de l'eau, ou **en ce que** l'on la traite avec de l'air présentant une humidité relative d'au moins 50% ou qu'on l'arrose avec de l'eau sur son côté qui présente la matière décorative, et **caractérisé en ce que** l'on la soumet ensuite à un procédé de séchage.

2. Procédé selon la revendication 1, **caractérisé en ce que** la matière décorative est le cuir.

3. Procédé selon la revendication 2, **caractérisé en ce que** le cuir est un cuir FOC (exempt de chrome).

4. Procédé selon les revendications 1 à 3, **caractérisé en ce que** l'eau présente une température comprise dans la gamme allant de 10°C à 90°C.

5. Procédé selon les revendications 1 à 4, **caractérisé en ce que** l'on entrepose la pièce moulée présentant un revêtement décoratif dans de l'eau ou qu'on l'arrose avec de l'eau pendant une durée allant de 2 heures à 4 jours, ou bien **caractérisé en ce qu'**on l'expose, pendant une durée allant de 2 heures à 12 heures, à un air présentant une humidité relative d'au moins 50%.

6. Procédé selon les revendications 1 à 5, **caractérisé en ce que** l'eau contient une substance tensio-active.

7. Procédé selon la revendication 6, **caractérisé en ce que** la substance tensio-active est un agent tensioactif non ionique.
